# EUROPEAN PATENT APPLICATION

(11) **EP 1 749 500 A1**
(43) Date of publication of application: **07.02.2007**
(21) Application number: 06015502.5
(22) Date of filing: 25.07.2006
(51) Int. Cl.: A61C 5/06, B05C 17/005

(54) **Nozzle for dental composition**

(30) Priority: 05.08.2005 JP 2005228417
(71) Applicant: GC Corporation, Tokyo 174-8585 (JP)
(72) Inventor: Tokui, Hideki GC Corp., Tokyo 174-8585 (JP); Yarimizu, Hideki GC Corp., Tokyo 174-8585 (JP); Ota, Daisuke GC Corp., Tokyo 174-8585 (JP); Mori, Takuya GC Corp., Tokyo 174-8585 (JP); Nakaseko, Hisashi GC Corp., Tokyo 174-8585 (JP)
(74) Representative: Müller-Boré & Partner Patentanwälte

(57) **Abstract**

To separate a catalyst for polymerizing a monomer contained in a liquid or paste dental composition containing at least a monomer, such as a dental resin cement, an autopolymerizing dental resin or a resin-reinforeced dental glass ionomer cement, from the liquid or paste dental composition to thereby improve storage stability of the dental composition and reduce number of division of the dental composition, an extrusion nozzle for a dental composition mounted on one end of an extruder for extruding a liquid or paste dental composition containing at least a monomer, the extrusion nozzle contains a catalyst for polymerizing the monomer contained in the dental composition during extrusion, and the catalyst is attached to an inner wall of an extruding channel of the extrusion nozzle.

## Description

The present invention relates to a nozzle for a dental composition. The nozzle is mounted on one end of an extruder for extruding a dental composition containing at least a monomer, such as a liquid or paste dental resin cement, an autopolymerizing dental resin and a resin-reinforced dental glass ionomer cement, to make the extruded dental composition in a curable state.

A dental composition containing at least a monomer is generally delivered in an indefinite form, such as a liquid and a paste. This is because it is necessary that the dental composition is molded to fit to a target or region, to which the dental composition is clinically applied, and is cured in the state where it is molded in the intended form.

For example, an autopolymerizing dental resin, which is used as a dental composition for various purposes, such as production of a provisional crown used before completing a permanent crown prosthesis or bridge artificial denture, and repair of a broken artificial denture base or artificial denture, is constituted by a polymer containing a pyrimidintrione derivative and an organic metal compound, and a monomer containing an organic halogen compound, an aromatic tertiary amine and a polymerization inhibitor. When using, the polymer and the monomer are weighed at given amounts respectively, and mixed in a rubber cup with a spatula to cure the composition by utilizing reaction among the pyrimidintrione derivative, the organic metal compound and the organic halogen compound (as described, for example, in JP-A-6-219919).

Even in the case where the dental composition contains not only one kind but also plural kinds of such a substance that contributes to polymerization of the monomer through change of itself, i.e., a polymerization initiator or a polymerization accelerator (which will be hereinafter referred simply to a catalyst), the catalysts can be divided and mixed with separate portions respectively when delivering to dentists, if the dental composition is constituted by separate portions, such as a combination of powder and liquid, or two kinds of paste. When using the composition by dentists for remedy, however, such a complicated operation is necessary that the separate portions of the dental composition are mixed with each other. Even though a dental composition is tried to be produced in the form of a one-component liquid or paste for omitting the complicated mixing operation, it has been impossible to deliver the dental composition to dentists without occurrence of deactivation of the catalyst while maintaining the storage stability of the composition.

A dental glass ionomer cement composition, which is applied to wide range of dental purposes, such as adhesion of an inlay or crown, plugging of dental caries cavities, relining, and preventive plugging of pits and fissures, is cured through neutralization reaction of fluoroaminosilicate glass powder and an α-β unsaturated carboxylic acid copolymer in the presence of water, and is excellent in biocompatibility (as described, for example, in JP-B-6-027047). In the dental glass ionomer cement composition, however, the three components cannot be stored in a state where the components coexist. Therefore, the composition is divided into two portions, i.e., fluoroaminosilicate glass powder and an aqueous solution of an α-β unsaturated carboxylic acid copolymer, which are housed in separate containers and delivered to dentists.

As having been described, the dental glass ionomer cement composition is delivered in such a form that the composition is divided into fluoroaminosilicate glass powder and an aqueous solution of an α-β unsaturated carboxylic acid copolymer. Since it is necessary that the powder component and the liquid component are accurately weighed and then kneaded, such a two-paste resin-reinforced dental glass ionomer cement composition is disclosed that the powder component and the liquid component are made into paste respectively, one of which is an aqueous paste containing an α-β unsaturated carboxylic acid copolymer, water and a filler, and the other of which is a monomer paste containing fluoroaminosilicate glass powder and a resin component, and a catalyst is contained in at least one of the pastes (as described, for example, in JP-A-11-228327). In the resin-reinforced dental glass ionomer cement composition, the resin component contained in the monomer paste is added for improving the property of the cement and is polymerized to be cured through action of the catalyst. As the catalyst, an organic aromatic compound having at least one -SO₂- group may be used, such as an aromatic sulfinic acid, an alkali salt thereof, and an aromatic sulfonyl compound, and it is necessary that the catalyst is not made in such a state that the catalyst contributes to polymerization of the resin component before the two pastes are mixed with each other, thereby preventing the resin component from being polymerized.

Accordingly, the catalyst, such as an organic aromatic compound having at least one -SO₂- group, is contained in the aqueous paste to separate from the resin composition, and in order to maintain storage stability particularly under high humidity conditions for a long period of time, the catalyst is microencapsulated with a polymer compound, such as cellulose (as described, for example, in JP-A-11-228327). However, it is the current situation that the microencapsulation brings about increase in labor and cost on production, and the storage stability is not sufficient even though the catalyst is microencapsulated.

Furthermore, even in the resin-reinforced dental glass ionomer cement composition, it is still necessary that the aqueous paste and the monomer paste are mixed and kneaded immediately before using.

An object of the present invention is to provide such a nozzle for a dental composition that a catalyst for polymerizing a monomer contained in a liquid or paste dental composition containing at least the monomer can be separated from the liquid or paste dental composition to improve the storage stability of the dental composition and to decrease the number of division of the dental composition, and during extrusion of the dental composition, the catalyst is made in contact with and/or mixed in the dental composition thus to make the extruded dental composition in a state where the dental composition can be cured.

As a result of earnest investigations made by the inventors for solving the problems associated with the conventional techniques, it has been found that the objects of the invention can be attained in the following manner. A catalyst for polymerizing a monomer contained in a liquid or paste dental composition containing at least the monomer is attached to an inner wall of an extruding channel of a nozzle for a dental composition mounted on one end of an extruder for extruding the dental composition, whereby the catalyst is not present in the dental composition, and during extrusion of the dental composition, the catalyst is made in contact with and/or mixed in the dental composition thus extruded. Thus, the present invention has been completed.

The present invention relates to a nozzle for a dental composition mounted on one end of an extruder for extruding a liquid or paste dental composition containing at least a monomer, the nozzle containing a catalyst for polymerizing the monomer contained in the dental composition during extrusion, the catalyst being attached to an inner wall of an extruding channel of the nozzle.

In the case where the dental composition is a one-component liquid or paste composition, it is preferred that the inner wall of the extruding channel has spiral grooves and/or a roughened surface, or the extruding channel is constituted by plural conduits, whereby the contact area with the extruded dental composition is increased. In the case where the dental composition is a two-component liquid or paste composition, it is preferred that the extrusion nozzle is provided with a mixing mechanism for mixing the extruded dental composition inside the extruding channel.

In the nozzle for extruding a dental composition according to the present invention, a catalyst adaptable to the extruded dental composition is attached to the inner wall of the extruding channel. According to the constitution, the catalyst is made in contact with and/or mixed in the dental composition during extrusion through the extruding channel, whereby the monomer contained in the extruded dental composition immediately starts polymerization to make the dental composition in a state where the dental composition can be cured.

Before extrusion, the catalyst is not present in the dental composition containing at least a monomer, whereby the storage stability of the dental composition can be improved, and the number of division of the dental composition can be decreased. In the case where only one catalyst is necessary for curing a dental composition, the catalyst can be separated from the liquid or paste dental composition, and thus the dental composition can have a one-component liquid or paste constitution. In the case where plural catalysts are necessary for curing a dental composition, for example, in the case where three catalysts, i.e., a pyrimidintrione derivative, an organic metal compound and an organic halogen compound, are necessary for curing a dental composition containing an autopolymerizing dental resin, the liquid or paste dental composition can be constituted in the number less than that of catalysts to be used.
Fig. 1 is a perspective view showing one embodiment of a nozzle for a dental composition according to the present invention.
Fig. 2 is a longitudinal cross sectional view showing an embodiment of a nozzle for a dental composition according to the present invention that is preferred in the case where the dental composition to be extruded is a one-component liquid or paste composition.
Fig. 3 is a perspective view showing another embodiment of a nozzle for a dental composition according to the present invention that is preferred in the case where the dental composition to be extruded is a one-component liquid or paste composition.
Fig. 4 is a perspective view showing another embodiment of a nozzle for a dental composition according to the present invention that is preferred in the case where the dental composition to be extruded is a one-component liquid or paste composition.
Fig. 5 is a partial sectional side view showing an embodiment of a nozzle for a dental composition according to the present invention that is preferred in the case where the dental composition to be extruded is a two-component liquid or paste composition.

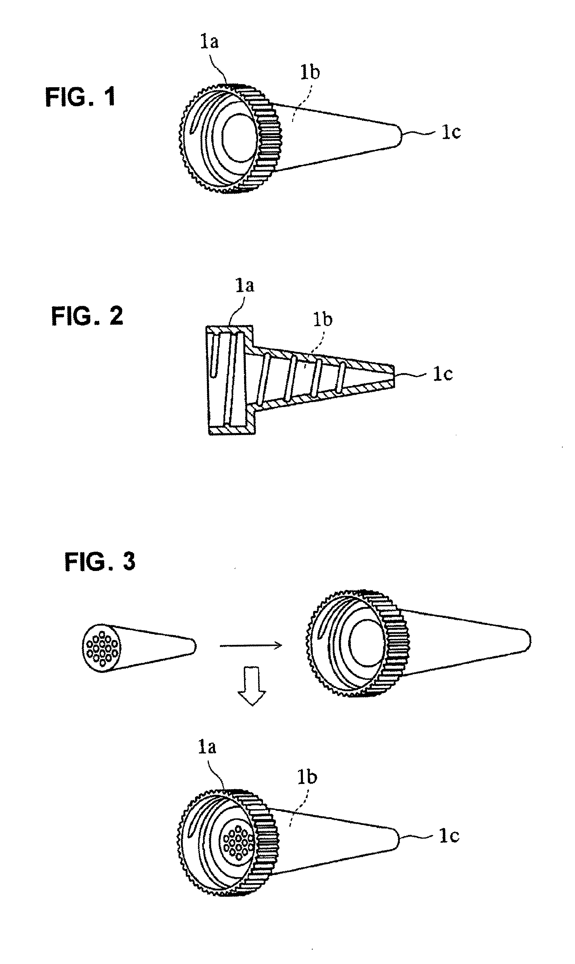

The nozzle for a dental composition of the present invention will be described in detail with reference to embodiments shown in Figs. 1 to 5.

In the embodiments shown in Figs. 1 to 5, numeral 1 denotes a nozzle for a dental composition of the present invention, which is mounted on one end of an extruder for extruding a liquid or paste dental composition containing at least a monomer, such as a dental resin cement, an autopolymerizing dental resin and a resin-reinforced dental glass ionomer cement. The nozzle 1 has a mounting part 1a, which preferably has knurl on an outer periphery thereof, on one end thereof has an extruding channel 1b, through which the dental composition is extruded, at a portion connected to the mounting part 1a, and 1 has a discharge outlet 1c on the other end. A catalyst for curing the dental composition through reaction with the monomer contained in the dental composition is attached to an inner wall of the extruding channel 1b.

The material for the nozzle for a dental composition of the present invention is not particularly limited as far as it is a plastic material stable to an ordinary dental composition, such as polypropylene, nylon and fluorine resins, and such a metal may also be used that is stable to the catalyst attached thereto and a dental composition that passes through it.

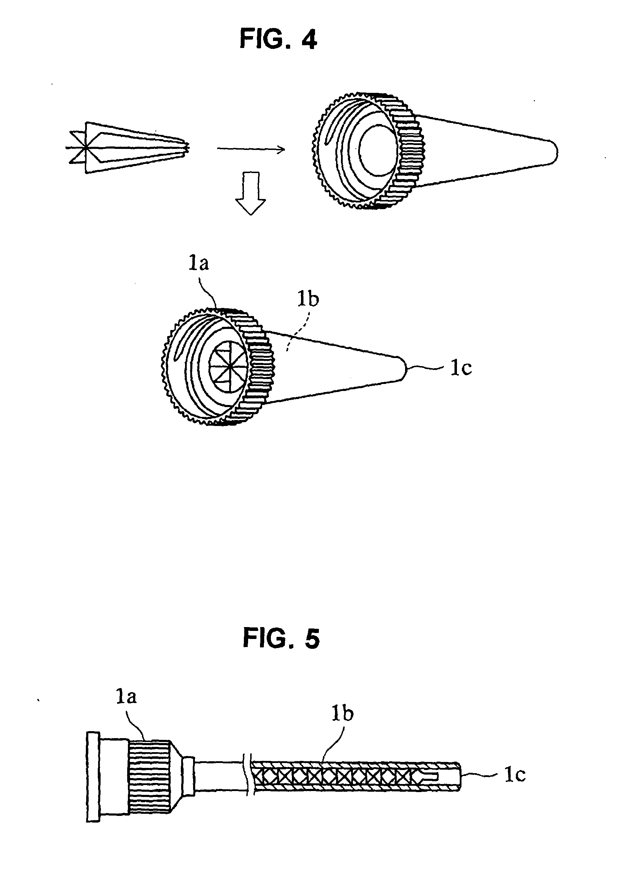

Examples of the shape of the extruding channel 1b include the following. In the case where the dental composition to be extruded is a one-component liquid or paste composition, it is preferred that the inner wall thereof has spiral grooves as shown in Fig. 2 or a roughened surface, which is not shown in the figure, or that, the extruding channel is constituted by plural conduits as shown in Figs. 3 and 4, whereby the contact area between the extruded dental composition and the catalyst is increased. In order to constitute the plural extruding conduits, a member for constituting plural conduits may be inserted into the nozzle as shown in Figs. 3 and 4. In the case where the dental composition is a two-component liquid or paste composition, it is preferred that the nozzle has a mixing mechanism for mixing the extruded dental composition as shown in Fig. 5.

More specifically, in the case the dental composition to be extruded is a one-component liquid or paste composition, spiral grooves may be provided on the inner wall of the extruding channel 1b like a rifle as in the embodiment shown in Fig. 2, plural conduits in parallel to each other may be provided within the extruding channel 1b between the mounting part 1a on one end and the discharge outlet 1c on the other end like lotus root as in the embodiment shown in Fig. 3, and a channel dividing member having radial protrusions may be inserted into the extruding channel 1b between the mounting part 1a on one end and the discharge outlet 1c on the other end like a cross section of citrus fruit as in the embodiment shown in Fig. 4. In the case where the dental composition is a two-component liquid or paste composition, a mixing mechanism for mixing the extruded dental composition as shown in Fig. 5, which is known as in JP-A-9-136023 (Insertion Type Fixing Apparatus for correctly fixing Attachment to Multicomponent Cartridge or Distributor) and Japanese Patent No. 3,219,341 (Mixer for Mixing Cartridge), may be provided within the extruding channel 1b between the mounting part 1a on one end, through which the two-component liquid or paste composition is extruded, and the discharge outlet 1c on the other end to make the dental composition extruded from the discharge outlet 1c in a sufficiently mixed state.

Methods for attaching a catalyst to the inner wall of the extruding channel 1b of the nozzle for a dental composition of the present invention include a method of passing a solution obtained by dissolving a catalyst to be attached in a suitable solvent, such as ethanol, through the extruding channel 1b, or spraying the solution onto the interior of the nozzle, followed by drying depending on necessity. A catalyst in a powder state may be attached to the inner wall of the extruding channel 1b through an aqueous solution having an adhesive, such as a carboxycellulose salt.

The catalyst to be attached to the inner wall of the extruding channel 1b of the nozzle for a dental composition of the present invention varies depending on the dental composition used, and is preferably at least one selected from such catalysts as a peroxide, an amine compound, an organic aromatic compound having at least one -SO₂- group, a pyrimidintrione derivative, an organic halogen compound, an ascorbic acid and an organic metal compound.

Preferred specific examples of the peroxide include benzoyl peroxide, potassium peroxodisulfate, sodium peroxodisulfate and ammonium peroxodisulfate.

Specific examples of the amine compound include N,N-dimethyl-p-toluidine, N,N-bis(2-hydroxyethyl)-p-toluidine, N,N-dimethylaminoethyl methacrylate, triethanolamine,methyl4-dimethylaminobenzoate, ethyl 4-dimethylaminobenzoate and isoamyl 4-dimethylaminobenzoate.

Specific examples of an aromatic sulfinic acid or a metallic salt thereof, and an aromatic sulfonyl compound as the organic aromatic compound having at least one -SO₂- group include sodium p-toluenesulfonate, lithium p-toluenesulfonate, benzenesulfinic acid, sodium benzenesulfinate, p-toluenesulfonyl chloride, p-toluenesulfonyl fluoride, o-toluenesulfonylisocyanate,p-toluenesulfonyl hydrazide, p-toluenesulfonamide, p-toluenesulfonyl imidazole, p-toluenesulfonyl cyanide, 2-(p-toluenesulfonyl)acetophenone, p-toluenesulfonyl-N-diethylamide, α-N, α-toluenesulfonyl-N-arginine, α-N, p-toluenesulfonyl-L-arginine methyl ester, p-toluenesulfonylmethyl isocyanate, p-toluenesulfonyl-N-methyl-N-nitrosamide, N-(p-toluenesulfonyl)-L-phenylalanine, N-p-toluenesulfonyl-L-phenylalanyl chloride, p-toluenesulfonyl acetonitrile, 2-(p-toluenesulfonyl)acetophenone, toluene-3,4-disulfonyl chloride, benzenesulfonamide,benzenesulfohydroxamicacid, benzenesulfonyl chloride, benzenesulfonyl isocyanate, benzenesulfonanilide, sodium benzenesulfonchloramide, benzenesulfondichloramide, benzenesulfonyl hydrazide, benzenesulfonyl-N-methylamide, 2-phenylsulfonylacetophenone, diaminodiphenylsulfone, 4,4'-sulfonyldiphenol, sulfapyridine, sulfaerosol, sulfamethizol, ethylbenzenesulfonyl chloride, nitrobenzenesulfonyl chloride and nitrobenzenesulfonylfluoride. These compounds may be a hydrate salt.

Specific examples of the pyrimidintrione derivative include 1-benzyl-5-phenylpyrimidintrione, 1-cycloheyxl-5-ethylpyrimidintrione, 1,3-dimethyl-5-cyclopentylpyrimidintrione, 1,3-dimethyl-5-cyclohexylpyrimidintrione, 1,3-dimethyl-5-ethylpyrimidintrione, 1,3-dimethyl-5-isobutylpyrimidintrione, 1,3-dimethyl-5-phenylpyrimidintrione, 1,3-dimethyl-5-n-butylpyrimidintrione, 1,5-dimethylpyrimidinetrione, 5-n-butylpyrimidintrione, 5-cyclohexylpyrimidintrione, 5-ethylpyrimidintrione, 5-isobutylpyrimidintrione, 5-isopropylpyrimidintrione, 5-phenylpyrimidintrione and 1,3,5-trimethylpyrimidintrione.

Specific examples of the organic halogen compound include benzyltributyl ammonium chloride, benzyldimethylcetyl ammonium chloride, benzyldimethylstearyl ammonium chloride, benzyltriethyl ammonium bromide, benzyltrimethyl ammonium chloride, cetalkonium chloride, cetylpyridinium bromide, cetylpyrimidinium, chloride cetyltriethyl ammonium bromide, didecyldimethyl ammonium chloride, dilauryldimethyl ammonium chloride, domiphen bromide, lauryldimethyl ammonium chloride, tetra-n-butyl ammonium bromide, tetra-n-butyl ammonium chloride, tetra-n-butyl ammonium iodide, tetradecyltrimethyl ammonium bromide, tetraethyl ammonium bromide, tetraethyl ammonium iodide and trioctylmethyl ammonium chloride.

The ascorbic acid may be ascorbic acid or a derivative thereof, and specific examples of the ascorbic acid derivative include sodium ascorbate, isoascorbic acid, sodiumisoascorbate, L-ascorbic acid stearate, L-ascorbic acid palmitate, trisodiumL-ascorbic acid 2-phosphate and magnesium L-ascorbic acid phosphate.

Specific examples of the organic metal compound include acetylacetone copper, copper 4-cyclohexylbutyrate, cupric acetate, copper oleate, acetylacetone manganese, manganese naphthenate, manganese octoate, acetylacetone cobalt, cobalt naphthenate, acetylacetone lithium, lithium acetate, acetylacetone zinc, zinc naphthenate, acetylacetone nickel, nickel acetate, acetylacetone aluminum, acetylacetone calcium, acetylacetone chromium, acetylacetone iron, sodium naphthenate and rare earth octoate.

The nozzle 1 for a dental composition of the present invention, which has a catalyst suitable for curing the dental composition attached on the inner wall of the extruding channel 1b, is used after being mounted on one end of an extruder for extruding the dental composition in a liquid or paste form containing at least a monomer. Examples of the extruder include such an embodiment that an extrusion plunger is inserted into one end of a cylinder having a discharge outlet on the other end like a syringe and the dental composition is housed in the cylinder, and such an embodiment disclosed in Figs. 3 and 16 of JP-A-9-136023 (Insertion Type Fixing Apparatus for correctly fixing Attachment to Multicomponent Cartridge or Distributor) that discharge outlets are closely provided on one side ends of two syringes provided in parallel to each other, two extrusion plungers are inserted into openings of the other side ends of the two cylinders thereof respectively so as to be moved together and the dental composition is contained in each of the cylinders.

When extruding the dental composition with the extruder, the dental composition thus extruded through the nozzle for a dental composition according to the present invention is made in contact with the catalyst attached to the inner wall of the extruding channel 1b or is mixed with the catalyst attached to the inner wall of the extruding channel 1b, and thus cured.

In the case where the dental composition is an autopolymerizing dental resin containing a (meth)acrylate monomer having at least one unsaturated double bond, polymer powder, such as polymethyl methacrylate, an organic halogen compound, and an organic metal compound, for example, such a nozzle 1 for a dental composition of the present invention is used that has a pyrimidintrione derivative as a catalyst attached to the inner wall of the extruding channel 1b, whereby, when extruding the autopolymerizing dental resin in a one-component paste form, the organic halogen compound and the organic metal compound in the paste are reacted with the pyrimidintrione derivative in the nozzle, whereby the autopolymerizing dental resin undergoes curing reaction. Accordingly, an autopolymerizing dental resin, which has been conventionally delivered to dentists in a two-component form, i.e., polymer powder, such as polymethyl methacrylate, and a monomer solution of methyl methacrylate, can be delivered to dentists in a one-component form, whereby dentists can omit operation of mixing powder and liquid at a time of remedy.

In the case where the dental composition is a resin-reinforced dental glass ionomer cement of a two-component paste form constituted by a paste containing fluoroaluminosilicate glass and a polymerizable monomer and a paste containing polyacrylic acid and water, for example, such a nozzle 1 for a dental composition of the present invention is used that has an aromatic sulfinic acid as a catalyst attached to the inner wall of the extruding channel 1b, whereby, when extruding the pastes while mixing, polymerization reaction of the polymerizable monomer occurs simultaneously with neutralization reaction of fluoroaluminosilicate glass and polyacrylic acid so that the resin-reinforced dental glass ionomer cement composition is cured. Accordingly, the catalyst, which has been conventionally microencapsulated with a polymer compound, such as cellulose, for using, can be used without microencapsulation, and furthermore, the dental composition can be improved in storage stability. It is also possible to use a microencapsulated catalyst for further improving the stability of the catalyst inside the nozzle.

The present invention will be described in more detail with reference to the following examples, but the present invention is not construed as being limited thereto.

### Example 1

In a room at 23°C, 100 g of ethanol was put in a glass vessel, to which 7 g of benzoyl peroxide was added, followed by sufficiently stirring. Thereafter, the solution was allowed to stand to precipitate undissolved benzoyl peroxide. The supernatant was flowed through the inside of a nozzle shown in Fig. 4 (having a cross section like citrus fruit) and allowed to stand for drying, so as to obtain a nozzle for a dental composition of the present invention for the use of a dental resin cement.

### Example 2

In a room at 23°C, 100 g of ethanol was put in a glass vessel, to which 12 g of 1-cyclohexyl-5-ethylpyrimidintrione was added, followed by sufficiently stirring. Thereafter, the solution was allowed to stand to precipitate undissolved 1-cyclohexyl-5-ethylpyrimidintrione. The supernatant was flowed through the inside of a nozzle shown in Fig. 1 (having a roughened surface on the inner wall of the extruding channel) and allowed to stand for drying, so as to obtain a nozzle for a dental composition of the present invention for the use of an autopolymerizing dental resin.

### Example 3

In a room at 23°C, 100 g of ethanol was put in a glass vessel, to which 7 g of sodium benzenesulfinate was added, followed by sufficiently stirring. Thereafter, the solution was allowed to stand to precipitate undissolved sodium benzenesulfinate in a state of sodium benzenesulfinate dihydrate. The supernatant was flowed through the inside of a nozzle shown in Fig. 5 having a mixing mechanism (Mixing Tip II SSS, a trade name, produced by GC Corp.) and allowed to stand for drying, so as to obtain a nozzle for a dental composition of the present invention for the use of a resin-reinforced dental glass ionomer cement.

### Example 4

In a room at 23°C, 100 g of ethanol was put in a glass vessel, to which 5 g of isoascorbic acid was added, followed by sufficiently stirring. Thereafter, the solution was allowed to stand to precipitate undissolved isoascorbic acid. The supernatant was flowed through the inside of a nozzle shown in Fig. 5 having a mixing mechanism (Mixing Tip II SS, a trade name, produced by GC Corp.) and allowed to stand for drying, so as to obtain a nozzle for a dental composition of the present invention for the use of a resin-reinforced dental glass ionomer cement.

Dental compositions having the formulations shown in Table 1 were prepared. In these, the dental resin cement and the autopolymerizing dental resin were each housed in a cartridge for a dental adhesion resin cement "LINKMAX CD", produced by GC Corp., and the resin-reinforced dental glass ionomer cements were each housed in a cartridge for a glass ionomer resin cement "Fuji Luting S", produced by GC Corp., that had been modified to make the tip end thereof capable of being mounted with the nozzle having a mixing mechanism. The nozzles of Examples 1 to 4 were mounted on ends of the cartridges, respectively, according to the combinations shown in Table 1, and then the dental compositions were extruded from the cartridges to pass through the nozzles.

**Table 1**

| Dental composition | Kind | Resin cement | Auto- polymerizing resin | Resin-reinforced glass ionomer cement | | Resin-reinforced glass ionomer cement | |
|---|---|---|---|---|---|---|---|
| | Type | one paste | one paste | two pastes (volume ratio: 1/1) | | two pastes (volume ratio: 1/1) | |
| | Composition | | | | | | |
| | p-Tolyldiethanolamine | 0.3 | | | | | |
| | Dilauryldimethyl ammonium chloride | | 0.5 | | | | |
| | Acetylacetone copper | | 0.01 | | | | |
| | Methyl methacrylate | | 30.0 | | | | |
| | Polymethyl methacrylate | | 70.0 | | | | |
| | Fluoroalumino silicate glass | 70.0 | | 70.0 | | 69.5 | |
| | 2-Hydroxyethyl methacrylate | | | 20.0 | | 20.0 | |
| | 2-Hydroxy-1, 3-dimethacryloxypropane | 5.0 | | 10.0 | | 10.0 | |
| | Di-2-methacryloyloxyethyl -2,2,4-trimethylhexamethylene dicarbamate | 25.0 | | | | | |
| | Polyacrylic acid | | | | 30.0 | | 30.0 |
| | Potassium peroxodisulfate | | | | | 0.5 | |
| | Silica | | | | 40.0 | | 40.0 |
| | Water | | | | 30.0 | | 30.0 |
| Nozzle | Example | 1 | 2 | 3 | | 4 | |
| | Attached catalyst | benzoyl peroxide | 1-cyclohexyl-5-ethylpyrimidin -trione | sodium benzene sulfinate | | isoascorbic acid | |

As a result, all of the one-component paste dental resin cement passed through the nozzle of Example 1, the one-component paste autopolymerizing dental resin passed through the nozzle of Example 2, and the two-component paste resin-reinforced dental glass ionomer cement compositions passed through the nozzles of Examples 3 and 4 were cured.

As having been described, by using the nozzle for a dental composition according to the present invention, a dental composition, which has been conventionally constituted by two pastes for curing with two catalysts, such as benzoyl peroxide and p-tolyldiethanolamine, can be constituted by only one paste, and a dental composition, such as an autopolymerizing dental resin, which has been conventionally constituted by two components of a polymer composition containing a pyrimidintrione derivat.ive and an organic metal compound and a monomer composition containing an organic halogen compound for curing with three catalysts, such as a pyrimidintrione derivative, an organic metal compound and an organic halogen compound, can be constituted by only one paste. Accordingly, a dental composition, which has been conventionally del ivered to dentists as a two-component liquid or paste composition, can be delivered as a one-component liquid or paste composition, and furthermore, a catalyst, which has been stably mixed in a dental composition conventionally only after microencapsulation, can be stably used without microencapsulation. Therefore, the product cost can be reduced, and the storage stability of a dental composition containing at least a monomer can be improved since no catalyst is present in the dental composition.

## Claims

1. A nozzle for a dental composition mounted on one end of an extruder for extruding a liquid or paste dental composition containing at least a monomer, the nozzle comprising a catalyst for polymerizing the monomer contained in the dental composition during extrusion, the catalyst being attached to an inner wall of an extruding channel of the nozzle.

2. The nozzle for a dental composition as claimed in claim 1, wherein the dental composition is a one-component liquid or paste composition, and the inner wall of the extruding channel has spiral grooves and/or a roughened surface.

3. The nozzle for a dental composition as claimed in claim 1 or 2, wherein the dental composition is a one-component liquid or paste composition, and the extruding channel is constituted by plural conduits.

4. The nozzle for a dental composition as claimed in claim 1, wherein the dental composition is a two-component liquid or paste composition, and the nozzle is provided with a mixing mechanism for mixing the extruded dental composition inside the extruding channel.
